# FASCICULE DE BREVET EUROPEEN

(11) **EP 0 392 953 B1**
(45) Date de publication et mention de la délivrance du brevet: **28.08.1996**
(21) Numéro de dépôt: 90470017.6
(22) Date de dépôt: 11.04.1990
(51) Int. Cl.: G08G 1/16, B60Q 1/54

(54) **Centrale électronique microprogrammable d'alarme anti-collision et d'aide à la conduite pour véhicules automobiles routiers**
Mikroprogrammierbare elektronische Antikollisionsalarmzentrale und Fahrhilfe für die Steuerung der Strassenkraftfahrzeuge
Microprogrammable electronic anticollision alarm control and aid for driving road motor vehicles

(30) Priorité: 13.04.1989 FR 8905179; 05.10.1989 FR 8913175
(43) Date de publication de la demande: 17.10.1990
(73) Titulaire: Tresse, Jean-Marie, F-57070 Saint-Julien lès Metz (FR)
(72) Inventeur: Tresse, Jean-Marie, F-57070 Saint-Julien lès Metz (FR)

(56) Documents cités:
- CH-A- 661 250
- DE-A- 1 818 770
- FR-A- 2 194 162
- FR-A- 2 339 174
- GB-A- 2 007 841
- GB-A- 2 197 108
- US-A- 4 692 764
- US-A- 4 706 195

## Description

La présente invention concerne une centrale électronique microprogrammable d'alarme anti-collision et d'aide à la conduite pour véhicules automobiles routiers, permettant d'apporter au conducteur en circulation, deux informations en temps réel, d'une part:
*- une information visuelle numérique délivrée par un module d'affichage, exprimant en mètres une marge de sécurité positive ou négative dont il dispose avec le véhicule qui le précède, par rapport à une distance minimale de sécurité, combinée simultanément à une alarme sonore en cas de risque de collision, et d'autre part:
*- une information sous forme de "bip" de rappel sonore délivrée par un module sonore, au moment du franchissement dans le sens croissant, des vitesses normalisées correspondant aux vitesses maximales autorisées par la réglementation, appliquées généralement en agglomération, sur route et sur autoroute selon le type de véhicule,

L'augmentation du trafic routier, l'encombrement des voies de circulation, la vitesse excessive, les mauvaises conditions météorologiques, l'absence d'informations embarquées pertinentes données en temps réel entraînent les automobilistes à enfreindre les limitations réglementaires de vitesses et à réduire les intervalles ou distances de sécurité entre véhicules.

Statistiquement, la vitesse excessive est à l'origine de près d'un accident mortel sur deux. Le non-respect des distances de sécurité entre véhicules est à l'origine de carambolages graves de plus en plus fréquents qui, avec les collisions par choc arrière font environ 10% des tués.

Les réglementations sur la circulation énoncent en général que:

" Le conducteur d'un véhicule circulant derrière un autre véhicule, doit laisser libre derrière celui-ci, une distance suffisante pour pouvoir éviter une collision en cas de ralentissement brusque ou d'arrêt subit du véhicule qui le précède. Cette distance est d'autant plus grande que la vitesse est élevée."

Diverses méthodes mnémotechniques permettent d'appliquer plus ou moins bien cette recommandation des différents codes de la route, mais en définitive, chaque conducteur doit apprécier sans indicateur de mesures, cette distance de sécurité perpétuellement variable selon les circonstances de conduite et les constructeurs automobiles n'ont pas encore apporté de solutions techniques embarquées adaptées.

Plusieurs solutions connues ont néanmoins été proposées pour indiquer au conducteur une distance minimale de sécurité.

Le brevet NISSAN Motor Co (GB-A-2 007 841) décrit divers moyens analogiques par combinaisons de cadrans à aiguilles, diodes et curseurs qui ne permettent pas un affichage numérique digital incrémenté comme le propose le présent brevet qui, en outre, par un clignotement progressif en cas d'alarme, matérialise l'augmentation du risque que l'on veut signaler.

Le brevet COPLAX (CH-A-661 250), propose un moyen d'alerter vers l'arrière le conducteur d'un véhicule qui suit de trop près par clignotement d'une mention lumineuse "Distanz", la distance minimale de sécurité étant élaborée à partir de commutateurs d'adaptation de niveau qui permettent au conducteur de régler lui-même la distance en fonction de son appréciation personnelle des conditions de circulation et des conditions climatiques, alors que le présent brevet propose de prendre automatiquement en compte pour le calcul de la distance de sécurité, par application des coefficients correcteurs appropriés, au moins deux des plus importants facteurs de risques (la pluie et le brouillard) par simple connexion des essuie-glace et du feu-arrière de brouillard lorsque les conditions climatiques en imposent l'usage.

Selon le brevet EKMAN (FR-A-2 339 174), des alarmes sonores sont émises pour indiquer des seuils de vitesses conseillées compte tenu de divers facteurs environnementaux, pris en compte par action manuelle du conducteur et choisis par lui sur un clavier de sélection, alors que le présent brevet propose de signaler les trois principales limitations de vitesses fixées par la réglementation, avec leurs éventuelles réductions sous intempéries, par l'usage consécutif des essuie-glace.

La centrale électronique microprogrammable d'alarme anti-collision et d'aide à la conduite, selon la revendication 1 objet de la présente invention, permet aux conducteurs en circulation une appréciation objective des distances de sécurité entre véhicules et incite au respect des trois principales limitations de vitesses imposées par la réglementation.

### CARACTERISTIQUES GENERALES.

La centrale électronique microprogrammable d'alarme anti-collision et d'aide à la conduite pour véhicules automobiles routiers permet d'apporter au conducteur en circulation, deux informations en temps réel, d'une part:
*- une information visuelle numérique délivrée par un module d'affichage MA, exprimant en mètres une marge de sécurité D-Dr positive ou négative dont il dispose avec le véhicule qui le précède, par rapport à une distance minimale de sécurité Dr, combinée simultanément à une alarme sonore en cas de risque de collision,
et d'autre part:
*- une information sous forme de "bip" de rappel sonore délivrée par un module sonore MS, au moment du franchissement dans le sens croissant, des vitesses normalisées VN, correspondant aux vitesses maximales autorisées par la réglementation, appliquées généralement en agglomération, sur route et sur autoroute selon le type de véhicule,

La centrale électronique microprogrammable objet de la présente description, analyse en permanence et en temps réel, dès la mise en route du véhicule, deux variables qui sont la vitesse propre V du véhicule fournie par le tachymètre de bord et la distance D mesurée avec le véhicule qui précède ou qui suit selon la configuration -avant ou arrière- adoptée.

La centrale compare prioritairement, pour une vitesse V donnée, la distance D mesurée avec une distance de référence Dr élaborée à partir d'une table de référence et considérée comme une distance minimale de sécurité.
- D désignant la distance avec le véhicule qui précède ou qui suit en configuration arrière, mesurée par un dispositif embarqué annexe tel que télémètre, radar ou tout autre dispositif de mesure similaire permettant de déterminer en permanence et en temps réel, la distance entre deux véhicules consécutifs circulant en file.
- Dr désignant une distance de référence ou distance minimale de sécurité établie selon les normes ou recommandations des réglementations en fonction de la vitesse V et modulée avec les coefficients des divers paramètres décrits ci-après, activés en fonction des circonstances.
- D-Dr désignant la marge de sécurité exprimée en mètres, résultant de la différence, positive ou négative, de ces deux distances D et Dr.

La centrale fournit en temps réel de manière numérique, l'écart chiffré dénommé "marge de sécurité" D-Dr, à condition que l'on détecte la présence d'un véhicule qui précède. Si cet écart est positif, la progression du véhicule est considérée comme sans danger et aucune alarme n'est générée. Par contre, lorsque cet écart devient négatif, on considère qu'il existe un risque de collision et il y a lieu de générer une alarme pour avertir le conducteur de l'imminence du danger de collision.

La centrale compare secondairement, la vitesse V aux limites de vitesses normalisées VN pour le type de véhicule considéré. Si la vitesse est égale, dans le sens croissant, à une de ces limites, la centrale émet un "bip" sonore unique, double ou triple, permettant au conducteur d'identifier sans ambiguïté la limite de vitesse franchie (bip unique = VN en agglomération, bip double = VN sur route, bip triple = VN sur autoroute).

L'alarme se présente sous différentes formes et on distingue:
- une alarme visuelle numérique modulée en fonction de l'augmentation du risque de collision et matérialisée sur un module d'affichage MA, par le clignotement progressif de l'indicateur d'écart chiffré de D-Dr. Plus l'écart chiffré négatif de D-Dr augmentera, plus le rythme du clignotement lumineux sera accéléré.
- une alarme sonore modulée en fonction de l'augmentation du risque de collision et matérialisée par un module sonore MS. Plus l'écart chiffré négatif de D-Dr augmentera, plus le rythme du signal sonore généré sera accéléré.
- une sortie active AL permettant par la fermeture d'un contact, l'activation d'alarmes extérieures à la centrale, tels que par exemple voyants lumineux, buzzers, messages vocaux, etc... Ce contact peut commander par exemple en cas d'alarme, un système de visualisation sur une partie externe du véhicule .

La centrale prend en compte, en plus des paramètres principaux que sont la vitesse V et la distance D, des paramètres auxiliaires d'étalonnage qui peuvent être internes ou externes. Ces paramètres permettent l'élaboration de la distance Dr à partir d'une table de référence fixant la distance minimale de sécurité pour une vitesse V donnée. Ces paramètres permettent aussi de fixer les trois principales limites de vitesses normalisées VN selon le milieu, le type de véhicule considéré et la réglementation en vigueur selon les pays.

Les PARAMETRES INTERNES: sans être limitatifs en nombre, ils permettent d'adapter la table de référence des distances de sécurité Dr aux capacités de freinage homologuées et les vitesses limites autorisées, au type de véhicule auquel est destinée la centrale.

On distingue par exemple les paramètres suivants avec leurs coefficients correspondants:
- VL: pour les véhicules légers, pour lesquels les valeurs des distances de sécurité sont celles spécifiées dans la table de référence, (Coefficient Cvl égal à 1). Les vitesses normalisées VN sont, par exemple, 50 km/h, 90 km/h, et 130 km/h en France par temps sec et ramenées par intempéries à 80 km/h et 110 km/h.
- PL: pour véhicules de type poids lourds, pour lesquels les valeurs des distances de la table de référence sont majorées par un coefficient Cpl supérieur à 1. Les vitesses normalisées VN pour la France sont, par exemple, 50 km/h, 80 km/h et 90 km/h selon la catégorie de véhicule et le milieu.
- TC: pour véhicules de type transports en commun, pour lesquels les valeurs des distances de la table de référence sont majorées par un coefficient Ctc supérieur à 1, mais différent de Cpl. Les vitesses normalisées VN pour la France sont, par exemple, 50 km/h, 90 km/h et 100 km/h selon la catégorie de véhicule, le milieu et l'équipement du système de freinage.
- ABR: pour véhicules équipés d'un système anti-blocage des roues, pour lesquels les valeurs des distances de sécurité élaborées suivant VL, PL, ou TC peuvent être minorées par un coefficient Cabr inférieur à 1.

Les PARAMETRES EXTERNES: sans être limitatifs en nombre, ils permettent d'adapter la table de référence des distances de sécurité:
- aux conditions climatiques dans lesquelles évolue le véhicule,
- au souhait du conducteur qui désire accroître sa distance de sécurité vers l'avant,
- à l'état général de maintenance et de vétusté du véhicule,
- à tout autre paramètre susceptible d'entraîner une modification de la distance de sécurité.

On distingue par exemple les paramètres suivants avec leurs coefficients correspondants:
- P: qui permet par temps de pluie, de majorer automatiquement la distance minimale de sécurité par un coefficient Cp supérieur à 1, dès la mise en fonction des essuie-glace,
- G: qui permet sur route glissante (neige/verglas) par mise en fonction soit manuelle d'un contacteur de détection fixé au tableau de bord du véhicule, soit par voie automatique, de majorer la distance minimale de sécurité par un coefficient Cg supérieur à 1 et d'annuler simultanément le seuil de vitesse que pourrait imposer le paramètre VS désigné ci-dessous,
- B: qui permet par temps de brouillard, par mise en fonction du feu-arrière de brouillard, de majorer automatiquement la distance minimale de sécurité par un coefficient Cb supérieur à 1 et d'annuler simultanément le seuil de vitesse que pourrait imposer VS désigné ci-dessous,
- VS: qui permet de neutraliser les alarmes tant que la vitesse V mesurée par le tachymètre du véhicule ne dépasse pas une valeur de seuil spécifiée par un coefficient Vs - vitesse de seuil, par exemple 50 km/h. En effet, si le déclenchement répétitif d'alarmes anti-collision paraît inutile voire gênant à vitesse réduite et dans les embouteillages lorsque les conditions climatiques sont bonnes, en revanche et même à faible allure, il se justifie en dessous de la vitesse de seuil lorsque les conditions climatiques sont difficiles, particulièrement en cas de neige/verglas sur chaussée glissante et en cas de brouillard dense ou par visibilité réduite,
- S: qui permet au conducteur, désireux d'accroître sa sécurité, compte tenu de ses aptitudes, (fatigue, vue déficiente, obscurité, etc..), de majorer la distance minimale de sécurité vers l'avant, par un coefficient de sensibilité Cs supérieur à 1, par action sur un potentiomètre placé au tableau de bord du véhicule.
- EN: entrée numérique qui permet un dialogue avec un ordinateur de bord et de majorer la distance minimale de sécurité Dr par un coefficient Ce supérieur à 1, pour tenir compte par exemple de l'état de maintenance et de vétusté du véhicule et de tous autres paramètres pouvant avoir une incidence sur la distance minimale de sécurité.

En plus des caractéristiques ci-dessus, la centrale dispose d'une alimentation électrique à partir de l'alternateur du véhicule.

### DEFINITION DES PARAMETRES DE FONCTIONNEMENT.

La centrale électronique microprogrammable d'alarme anti-collision et d'aide à la conduite prend en compte les grandeurs suivantes:
- la distance D au véhicule qui précède ou qui suit est prise en compte jusqu'à 250 mètres (sensibilité 1 mètre).
- la vitesse V propre du véhicule mesurée par le tachymètre de bord est prise en compte jusqu'à 250 km/h (sensibilité 1 km/h).
- les distances minimales de sécurité Dr en configuration avant sont par exemple, calculées par la formule:

| | | |
|---|---|---|
| Dr = V²/300 | Dr en mètres | V en km/h |

mais peuvent, par construction, être établies différemment pour s'adapter aux diverses normes et réglementations en vigueur (présentes et à venir).
- les coefficients d'étalonnage sont par exemple fixés comme suit:

| | | |
|---|---|---|
| Cvl = 1 | Cp = 1,45 | Cs > 1 |
| Cpl = 1,36 | Cg = 2 | Ce > 1 |
| Ctc = 1,15 | Cb = 1,75 | Vs = 50 km/h |
| Cabr = 0,75 | | |

mais peuvent par construction, être établis différemment pour s'adapter, selon les pays, aux diverses normes en vigueur (présentes et à venir).

### MODE DE REALISATION DE L'INVENTION.

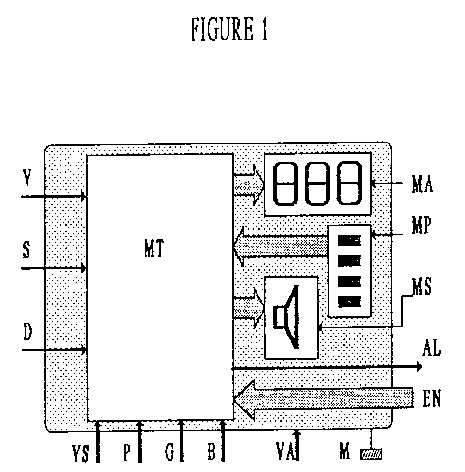

Selon le descriptif précédent, on peut présenter par exemple en figure 1, le schéma fonctionnel de la centrale et définir les grandeurs d'entrées et de sorties.

On y distingue:
- VA et M: entrées permettant l'alimentation électrique de la centrale qui peut être de 12 ou 24 volts selon le type de véhicule concerné.
- V: entrée permettant d'appliquer à la centrale une tension continue variant entre 0 et 10 volts, représentant la vitesse propre du véhicule.
- D: entrée permettant d'appliquer à la centrale une tension continue variant de 0 à 10 volts, représentant la distance mesurée avec le véhicule qui précède ou qui suit, selon la configuration choisie.
- S: entrée de réglage de sensibilité par potentiomètre qui permet au conducteur d'accroître la distance de sécurité vers l'avant en fonction de ses aptitudes propres à la conduite automobile.
- P, G et B: sont des signaux de type binaire qui permettent à un module de traitement d'effectuer des corrections sur la distance de sécurité. Ces signaux, non limitatifs aux seuls exemples cités, sont positionnés par un module MIF de manière automatique lors de la mise en fonction de l'un ou l'autre des équipements du véhicule: essuie-glace, contacteur de détection de neige/verglas, feu-arrière de brouillard.
- VS: est un signal de type binaire qui sera neutralisé automatiquement par la mise en fonction des signaux B ou/et G.

Ces signaux sont des signaux d'entrée pour la centrale et les connexions adéquates sont à réaliser lors de l'installation de la centrale sur le véhicule.
- EN: entrée numérique qui permet un dialogue avec un ordinateur de maintenance de bord ou tout autre dispositif de dialogue embarqué véhiculant des données numériques codées sur 4 bits, pour tenir compte du et/ou des paramètres pouvant avoir une incidence sur le calcul de la distance minimale de sécurité Dr, (état de maintenance, vétusté, etc...).
- MP: module qui permet de fixer l'état des paramètres VL, PL, TC et ABR au module de traitement. Ces paramètres, non limitatifs aux seuls exemples cités, sont initialisés grâce aux sélecteurs placés à l'intérieur du boîtier de la centrale, lors de l'installation de cette dernière sur le véhicule.
- MT: module de traitement qui assure la gestion logicielle des grandeurs d'entrées et de sorties par microcontrôleur CI8.
- MA: module d'affichage lumineux qui permet sur trois digits de visualiser en temps réel, l'écart chiffré D-Dr, exprimé en mètres.
- MS: module sonore qui permet de générer l'alarme sonore en cas de risque de collision et le "bip" sonore unique, double ou triple lors du franchissement de l'une ou l'autre des vitesses maximales autorisées par la réglementation.
- AL: sortie active qui permet en cas d'alarme le pilotage d'autres dispositifs extérieurs à la centrale tels que par exemple voyants lumineux, buzzers, messages vocaux et/ou systèmes de visualisation sur une partie externe du véhicule.

Pour conserver à l'invention le caractère d'adaptabilité aux normes en vigueur ou à venir, on choisit pour la réalisation du module de traitement, une solution à base de logique programmée utilisant un microcontrôleur CI8 (microprocesseur, RAM,ROM et entrées/sorties). Tous les coefficients et valeurs cités précédemment seront ainsi modifiables aisément lors de la fabrication par simple modification de la table de constantes en mémoire ROM, ce qui permet d'adapter la centrale et la rendre compatible avec la réglementation et avec les normes en vigueur ou à venir dans différents pays.

Le microcontrôleur CI8 dispose d'une chaîne d'acquisition de données analogiques afin de permettre la conversion des grandeurs V, S et D.

Le microcontrôleur CI8 assure la gestion du module sonore et du module d'affichage, qui est du type multiplexé.

L'acquisition des paramètres d'étalonnage des modules MP et MIF et de l'entrée numérique EN par le module de traitement MT se fera grâce aux ports d'entrées/sorties du microcontrôleur CI8.

### ETUDE DE LA STRUCTURE MATERIELLE DE LA CENTRALE.

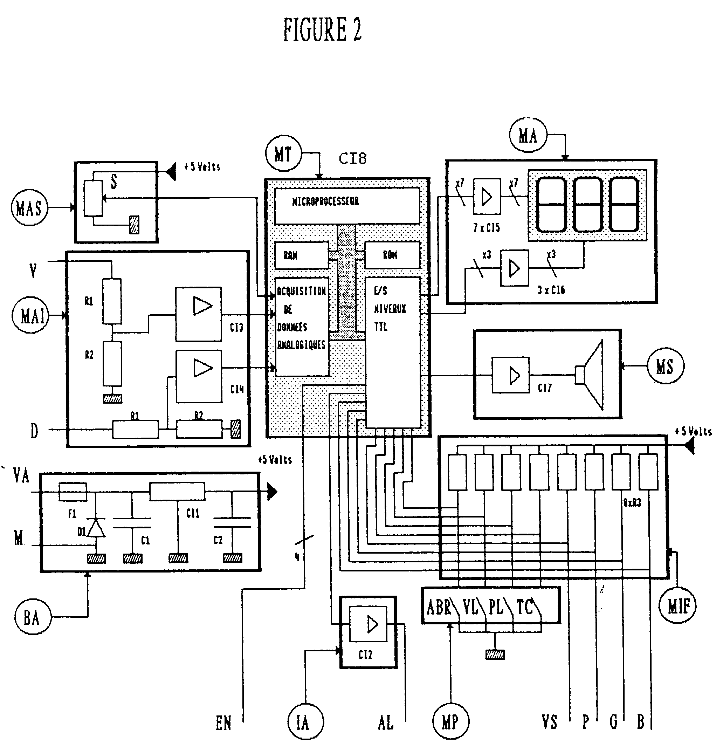

On donne en figure 2, un exemple de schéma détaillé de la centrale électronique microprogrammable d'alarme anti-collision et d'aide à la conduite pour véhicules automobiles routiers. La simplicité relative de ce schéma tient au fait que la majorité des fonctions est assurée par le microcontrôleur CI8 de façon logicielle. On y distingue:
- BA: un bloc d'alimentation, constitué de F1, D1, C1, C2 et CI1, permettant d'élaborer la tension de 5 volts indispensable au bon fonctionnement des composants intégrés utilisés. Le fusible F1 et la diode D1 permettant une protection respectivement contre les surintensités et l'inversion de polarité de la centrale. Le composant intégré CI1 élabore une tension de 5 volts régulée. Les condensateurs C1 et C2 assurent une meilleure stabilité de la tension disponible en sortie du bloc d'alimentation.
- MAI: un module d'adaptation d'impédance et de niveau de tension, constitué des résistances R1 et R2 et des composants CI3 et CI4 permettant d'assurer une interface entre les entrées V et D de la centrale et le dispositif d'acquisition de données analogiques du microcontrôleur CI8. Les résistances R1 et R2 permettent de ramener le niveau de tension des entrées V et D à un niveau compatible avec les circuits CI3 et CI4 réalisant eux, une adaptation d'impédance avec CI8.
- MAS: un module d'acquisition de la sensibilité S constitué d'un potentiomètre permettant, après conversion analogique/numérique, d'obtenir une valeur chiffrée de la sensibilité désirée par le conducteur.
- MP: un module de sélection de l'état des paramètres internes, VL, PL, TC et ABR, constitué des interrupteurs unipolaires correspondants.
- MIF: un module de mise en forme des entrées de paramètres externes d'étalonnage, constitué des résistances R3. L'état actif de l'un quelconque des paramètres d'étalonnage est matérialisé par la mise à la masse ("0" logique) par un interrupteur de l'entrée correspondante du microcontrôleur CI8, entrée qui portera par la suite le nom du paramètre considéré. La non-fermeture d'un des interrupteurs signifie la non-prise en compte (état logique "1") du paramètre correspondant. Les résistances R3 permettent dans ce cas, de fixer le potentiel à l'entrée de CI8 à 5 volts.
- IA: une interface Alarme, constituée de CI2, qui permet d'activer, en cas d'alarme, la sortie correspondante de la centrale en la plaçant à un potentiel nul (Imax étant de 500mA).
- MS: un module sonore, constitué par exemple de CI7 et d'un haut-parleur électrodynamique, qui permet l'attaque de ce dernier à partir d'un signal carré d'amplitude 5 volts de fréquence fixe et modulé en amplitude dans le cas où il y a lieu de générer une alarme sonore.
- EN: pour mémoire, une entrée numérique correspondant aux ports d'entrées/sorties du microcontrôleur permettant un dialogue avec un ordinateur de bord pour des informations numériques codées sur 4 bits.
- MA: un module d'affichage lumineux, constitué par exemple de trois afficheurs à cathode commune, chacun validé par la mise à "1" logique d'une sortie du microcontrôleur CI8 et cela à travers une interface de type collecteur ouvert CI6. Sept sorties du microcontrôleur, bufferisées par les circuits CI5, pilotent les segments qui sont mis en parallèles pour les trois afficheurs lumineux. Le multiplexage et l'incrémentation des valeurs affichées sont assurés logiciellement.
- MT: un module de traitement constitué de CI8 qui est le microcontrôleur défini précédemment.

La nature et le nombre des amplificateurs ainsi que leurs caractéristiques dépendent essentiellement de la nature du microcontrôleur choisi pour l'application. Les caractéristiques des autres composants dépendent de la nature du microcontrôleur et des amplificateurs choisis pour l'application. L'intensité consommée par la centrale peut être estimée à 1 ampère; ce qui correspond à une puissance de 12 ou 24 watts respectivement pour des véhicules disposant d'une tension batterie de 12 ou 24 volts.

### DESCRIPTION DU LOGICIEL DE GESTION DE LA CENTRALE. LGC

Le logiciel LGC sera, afin d'optimiser le temps de réponse du dispositif, écrit en langage " Assembleur ".

Les grandeurs traitées D, Dr, V, D-Dr,... seront codées sur 8 bits; ce qui permettra d'obtenir la précision requise. Les informations véhiculées sur l'entrée numérique EN seront codées sur 4 bits.

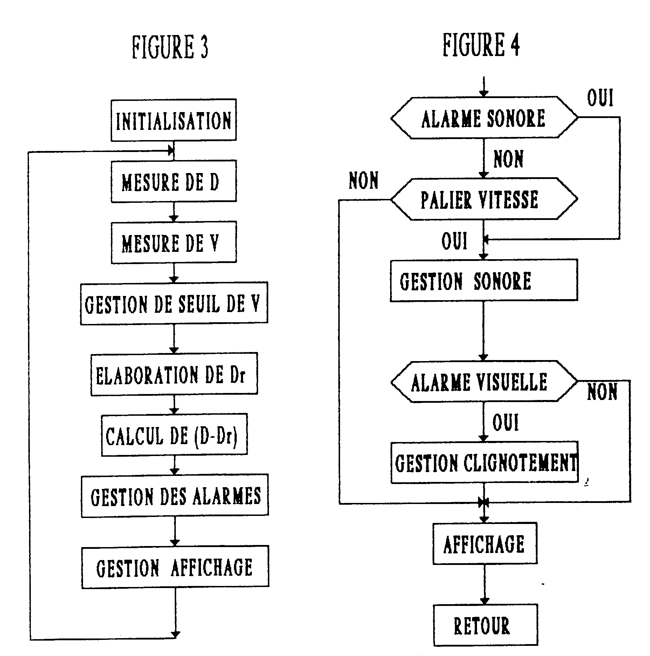

On donne en figure 3, l'organigramme général du traitement à effectuer. On y distingue les modules:

INITIALISATION: ce module permet:
- d'initialiser les variables en RAM,
- d'initialiser les ports d'entrées/sorties,
- d'initialiser une base de temps qui génèrera une interruption périodique permettant de lancer un sous-programme d'interruption,
- d'initialiser l'affichage,
- d'inhiber les alarmes.

C'est aussi ce module qui permet la prise en compte des paramètres d'étalonnage internes VL, PL, TC et ABR.

MESURE DE D: il permet, par l'intermédiaire du module d'acquisition de données de CI8, d'acquérir la donnée D codée en binaire sur 8 bits.

MESURE DE V: il permet, par l'intermédiaire du module d'acquisition de données analogiques de CI8, d'acquérir la donnée V codée en binaire sur 8 bits.

GESTION DU SEUIL DE V: ce module permet, si la vitesse est égale dans le sens croissant à une des limites de vitesse normalisée VN, de positionner un indicateur IV qui permettra d'obtenir un signal sonore bref ("bip" unique, double ou triple) pour indiquer le franchissement de l'une ou l'autre des trois limites de vitesses normalisées VN.

ELABORATION DE Dr: il permet, après scrutation des paramètres d'étalonnage externes VS, P, G et B, de la sensibilité S et de la donnée issue de l'entrée numérique EN, d'élaborer la grandeur Dr. Pour cela, on scrute en tenant compte de l'information vitesse , la table des distances de référence; puis un calcul permet d'établir Dr en intégrant les différents coefficients d'étalonnage.

CALCUL DE D-Dr: ce module élabore l'information D-Dr qui sera codée en binaire sur 8 bits. Si la valeur est négative, on positionne un indicateur d'alarme IA à "1" et on change le signe de la valeur pour permettre son affichage. Si la valeur est positive, on remet à "0" l'indicateur d'alarme et on inhibe la sortie de commande du haut-parleur.

GESTION DES ALARMES: ce module établit le paramètre PC de clignotement de l'affichage, le paramètre PM de modulation de l'alarme sonore et l'activation de la sortie d'alarme AL extérieure à la centrale, dans le cas où l'indicateur d'alarme IA a été placé à "1". La fréquence de clignotement de l'affichage, fixée par PC, est obtenue par calcul en fonction de la valeur absolue de l'écart négatif, D-Dr. La fréquence augmente avec cet écart. L'alarme sonore consiste en un signal d'amplitude constante et de fréquence fixée. La modulation de ce signal résulte de son activation pendant une durée proportionnelle, fixée par PM, à la valeur absolue de l'écart négatif D-Dr. L'alarme externe est positionnée pendant toute la durée où la valeur D-Dr reste négative.

GESTION AFFICHAGE: ce module réalise la conversion binaire/décimale de D-Dr, puis la conversion décimale/sept segments de la grandeur D-Dr. Le résultat de ces conversions est placé dans trois octets mémoires. Si la distance mesurée D est supérieure à 250 mètres, l'affichage sera éteint, de même qu'il sera éteint en dessous de la vitesse de seuil VS, sauf en cas d'activation de B ou G. Ce module assure une incrémentation de l'affichage des valeurs de D-Dr selon un pas choisi par tranches de niveaux. L'affichage lui-même fera partie d'un sous-programme d'interruption.

On donne en figure 4, l'organigramme du sous-programme d'interruption, activé de manière périodique par une base de temps interne au microcontrôleur. On y distingue:
- un test d'alarme sonore: qui porte sur le bit indicateur d'alarme IA. Si ce bit est à "1", on effectue un saut au module de gestion sonore. Dans le cas contraire (pas d'alarme), on passe au test palier vitesse qui est considéré comme moins prioritaire.
- un test palier vitesse: qui porte sur l'indicateur IV de franchissement d'une des limites de vitesse normalisée VN. Si l'indicateur n'est pas à "1", on effectue un saut direct à l'affichage.
- un module de gestion sonore: qui n'est activé que si l'un des indicateurs alarme IA ou vitesse IV est à "1". Si l'indicateur IA est à "1", on va alternativement valider puis dévalider la sortie son pendant des durées fixées selon le paramètre PM élaboré par le module gestion des alarmes. Si l'indicateur IV est à "1", on va valider la sortie son pendant une durée fixe après quoi, on replacera cet indicateur à "0".
- un test alarme visuelle: qui porte sur l'indicateur d'alarme IA. Si l'indicateur n'est pas à "1", on effectue un saut direct à l'affichage.
- un module de gestion du clignotement: qui n'est activé que si l'indicateur IA est à "1". On va alternativement valider puis dévalider l'affichage pendant des durées fixées selon le paramètre PC élaboré par le module gestion des alarmes.
- un module d'affichage: qui assure l'affichage incrémenté du contenu des octets mémoires contenant les valeurs en code sept segments élaboré par le module de gestion de l'affichage. L'affichage est du type multiplexé et il tient compte des paramètres de clignotement.

### REVERSIBILITE DU DISPOSITIF D'ALARME ANTI-COLLISION.

La centrale électronique microprogrammable d'alarme anti-collision et d'aide à la conduite pour véhicules automobiles routiers permet, par adaptation du logiciel de gestion, la reversibilité en configuration arrière du dispositif anti-collision.

En effet, de la même manière que l'alarme anti-collision par l'avant est déclenchée par le dispositif de mesure de la distance entre véhicules placé à l'avant de celui-ci lorsqu'il serre de trop près celui qui le précède, l'alarme anti-collision par l'arrière peut être déclenchée si le dispositif de mesure de la distance entre véhicules est placé à l'arrière de celui-ci lorsqu'il est suivi de trop près par un véhicule suiveur.

La reversibilité du système est obtenue par une simple modification du logiciel de gestion de la centrale et par modification de la valeur des paramètres correspondants initialisés par la table de constantes en mémoire ROM.

Dans cette configuration arrière où le dispositif de mesure de la distance est placé à l'arrière du véhicule et dirigé vers le véhicule suiveur, l'alarme s'adresse principalement au conducteur du véhicule suiveur, la fonction d'affichage du module MA dans le véhicule suivi étant dans ce cas neutralisée.

L'alarme principale consiste alors, sur la sortie active AL, à piloter par exemple d'une part un clignotement alterné des signaux lumineux arrière du véhicule équipé suivi, afin d'alerter le conducteur du véhicule suiveur de sa proximité dangereuse et d'autre part simultanément, un voyant lumineux de rappel au tableau de bord matérialisant l'alarme secondaire, afin d'informer visuellement le conducteur du véhicule équipé suivi du déclenchement de l'alarme anti-collision par l'arrière.

Un clignotement en cas de danger, alterné gauche/droite des signaux arrière conventionnels homologués (par exemple feux de recul -blancs et/ou des feux de détresse -orangés, ou tous autres signaux homologués pris séparément ou simultanément), permettrait de différencier cet usage particulier en cas d'alarme, des utilisations habituelles des signaux arrière.

Le calcul de la distance de sécurité Dr arrière pourrait se faire selon une formule plus "serrée" que celle de la configuration avant, de manière à ne déclencher l'alarme que si la distance de sécurité, compte tenu de la vitesse et des autres paramètres, est transgressée par exemple de plus de 50% de la valeur adoptée en configuration avant.

Les distances minimales de sécurité Dr, en configuration arrière pourraient par exemple, être calculées par la formule V²/600 et modulées avec les coefficients des paramètres suivants:
a) pour les paramètres internes:
   - Cvl = 1 Cpl = 1,36 Ctc = 1,15
   - Vs = 50km/h Cabr = 1,25 * (* 0,75 en configuration avant)
b) pour les paramètres externes:
   - Cp = 1,45 Cb = 1,75 Cg = 2
(Les deux paramètres Cs-sensibilité et Ce-ordinateur de bord pourraient éventuellement être neutralisés dans cette configuration).

Les valeurs proposées ci-dessus sont évidemment indicatives et pourront être arrêtées différemment pour être compatibles avec les réglementations ou normes en vigueur selon les pays. L'adaptabilité du logiciel du module de traitement MT permet toute latitude dans le choix des valeurs des coefficients des paramètres à prendre en compte pour cette configuration arrière simplifiée.

## Revendications

1. Centrale électronique microprogrammable d'alarme anti-collision et d'aide à la conduite pour véhicules automobiles routiers, permettant d'apporter au conducteur en circulation, deux informations en temps réel,
d'une part:
*- une information visuelle numérique délivrée par un module d'affichage (MA), exprimant en mètres une marge de sécurité D-Dr positive ou négative dont il dispose avec le véhicule qui le précède, par rapport à une distance minimale de sécurité Dr, combinée simultanément à une alarme sonore en cas de risque de collision,
et d'autre part:
*- une information sous forme de "bip" de rappel sonore délivrée par un module sonore (MS), au moment du franchissement dans le sens croissant, des vitesses normalisées correspondant aux vitesses maximales autorisées par la réglementation, appliquées généralement en agglomération, sur route et sur autoroute selon le type de véhicule,
caractérisée en ce qu'elle comprend:
a)- un microcontrôleur programmable (CI8) d'un module de traitement (MT) permettant en combinaison avec les mesures de vitesses (V) et de distances D d'un module d'adaptation d'impédance (MAI), une gestion de l'ensemble des grandeurs d'entrées/sorties et des fonctions logicielles d'une part et permettant, par simple modification du logiciel, une adaptabilité de la centrale à tous les paramètres et coefficients correspondants, pris en compte par un module d'acquisition de la sensibilité (MAS), un module de sélection de l'état des paramètres internes (MP), un module de mise en forme des paramètres externes (MIF) et par une entrée numérique (EN), une reversibilité en configuration arrière, une compatibilité avec les réglementations et normes en vigueur ou à venir d'autre part, pour ce qui concerne les distances minimales de sécurité Dr à observer entre véhicules circulant en file et les vitesses normalisées,
b)- un module d'affichage lumineux multiplexé (MA) permettant une visualisation numérique incrémentée de la marge de sécurité D-Dr, permanente lorsqu'elle est positive et clignotante lorsqu'elle devient négative, matérialisant l'augmentation dû risque de collision selon un paramètre de clignotement et un paramètre de modulation de l'alarme, dont les fréquences varient avec l'augmentation de la valeur absolue de l'écart négatif de la marge de sécurité D-Dr,
- D désignant la distance avec le véhicule qui précède ou qui suit en configuration arrière, mesurée par un dispositif embarqué annexe,
- Dr désignant la distance minimale de sécurité établie selon les normes ou recommandations des réglementations en fonction de la vitesse (V) et modulée en fonction des circonstances, par la prise en compte automatique des paramètres correspondant à l'usage des essuie-glace par temps de pluie, à la mise en fonction d'un contacteur de détection de neige/verglas, à la connexion du feu-arrière de brouillard, au réglage d'un potentiomètre de sensibilité et à l'activation d'une entrée numérique d'un ordinateur de maintenance de bord et de vétusté,
- D-Dr désignant la marge de sécurité exprimée en mètres résultant de la différence, positive ou négative, de ces deux distances D et Dr,
c)- le module sonore (MS) générant deux types d'alarme sonore,
à savoir:
*- une alarme sonore modulée avec le paramètre de modulation selon l'augmentation de la valeur absolue de l'écart négatif de la marge de sécurité D-Dr en cas de risque de collision,
*- un "bip" sonore de rappel unique, double ou triple au moment du franchissement dans le sens croissant, de l'une ou l'autre des trois vitesses normalisées fixées par les réglementations et appliquées respectivement pour la circulation en agglomération, sur route et sur autoroute, pour les trois types de véhicules routiers - véhicules légers (VL), poids lourds (PL) et transports collectifs (TC)-,
d)- une sortie active (AL) permettant de piloter en cas d'alarme, d'autres dispositifs extérieurs à la centrale, tels que par exemple voyants lumineux, buzzers, messages vocaux et/ou systèmes de visualisation externe, et en cas de montage de la centrale en configuration arrière, un clignotement alterné gauche/droite d'un ou des signaux conventionnels homologués situés à l'arrière du véhicule et simultanément une alarme visuelle secondaire de rappel au tableau de bord,
e)- un logiciel de gestion de la centrale en langage "Assembleur", optimisant le temps de réponse et la gestion du dispositif et permettant, sans modification de sa structure matérielle, mais par simple modification des valeurs d'une table de constantes en mémoire ROM, des paramètres et des coefficients, de rendre la centrale compatible avec les réglementations et normes en vigueur ou à venir.

2. Centrale électronique microprogrammable selon la revendication 1 caractérisée en ce qu'elle permet par le module d'adaptation d'impédance (MAI), d'assurer une interface entre les entrées vitesse (V) et distance D et un dispositif d'acquisition de données analogiques du microcontrôleur (CI8).

3. Centrale électronique microprogrammable selon la revendication 1 caractérisée en ce qu'elle permet par le module de sélection de l'état des paramètres internes (MP), d'établir automatiquement les seuils de vitesses normalisées correspondant aux vitesses réglementaires en vigueur ainsi que leurs éventuelles réductions réglementaires imposées par temps de pluie d'une part et la prise en compte des trois types de véhicules routiers - véhicules légers (VL), poids lourds (PL) et transports collectifs (TC) ainsi que leur éventuel système anti-blocage de roues (ABR), en effectuant une correction appropriée par application des coefficients correspondants sur la distance minimale de sécurité Dr d'autre part.

4. Centrale électronique microprogrammable selon la revendication 1 caractérisée en ce qu'elle permet, par le module de mise en forme (MIF), la prise en compte automatique des paramètres externes: -pluie (P), -neige/verglas (G), -brouillard (B), en effectuant une correction appropriée par application des coefficients correspondants, sur la distance minimale de sécurité Dr respectivement lors de la mise en fonction des essuie-glace, du contacteur de détection de neige/verglas et du feu-arrière de brouillard et d'établir automatiquement une vitesse de seuil (VS) en dessous de laquelle le déclenchement de l'alarme anti-collision est neutralisé et le module d'affichage (MA) éteint.

5. Centrale électronique microprogrammable selon les revendications 1 et 4 caractérisée en ce qu'elle permet une neutralisation de la vitesse de seuil (VS), dès l'activation de l'un ou l'autre des paramètres externes - neige/verglas (G) ou brouillard (B)- assurant l'affichage de la marge de sécurité D-Dr et le déclenchement d'une alarme anti-collision aux vitesses inférieures à la vitesse de seuil (VS), par application des coefficients correspondants, lors de la mise en fonction respective du contacteur de détection de neige/verglas ou du feu-arrière de brouillard.

6. Centrale électronique microprogrammable selon la revendication 1 caractérisée en ce qu'elle permet, par le module d'acquisition de la sensibilité (MAS), de majorer la distance minimale de sécurité Dr, dès l'activation d'un paramètre de sensibilité (S) par action du conducteur sur le potentiomètre de sensibilité placé au tableau de bord, pour augmenter sa marge de sécurité D-Dr vers l'avant, dans des limites fixées par application du coefficient correspondant.

7. Centrale électronique microprogrammable selon la revendication 1 caractérisée en ce qu'elle permet à l'entrée numérique (EN), par un dialogue avec l'ordinateur de maintenance de bord et avec tout autre dispositif embarqué véhiculant des données numériques, une prise en compte automatique de l'état de maintenance et de vétusté du véhicule, en effectuant la correction appropriée par application du coefficient correspondant sur la distance minimale de sécurité Dr.

## Patentansprüche

1. Mikroprogrammierbare elektronische Antikollisionsalarmzentrale und Fahrhilfe für die Steuerung der Straßenkraftfahrzeuge, die dem Fahrzeuglenker zwei Informationen in Echtzeit liefert,
einerseits:
*- eine Maßangabe in Meter - mittels Digitalsichtanzeige (MA) - des dem Fahrzeuglenker zur Verfügung stehenden positiven oder negativen Zusatzsicherheitsabstands D-Dr, welcher die Differenz zwischen Gesamtabstandes D zum vorausfahrenden Fahrzeug und vorgeschriebenem Mindestsicherheitsabstand Dr darstellt - bei Kollisionsgefahr (d.h. bei negativem Zusatzsicherheitsabstand) ertönt dabei zusätzlich ein akustisches Alarmsignal,
andererseits:
*- ein akustisches Signal in der Form eines Bip-Impulses (MS), das bei Überschreitung der durch die Straßenverkehrsordnung je nach Fahrzeugtyp und Verkehrsart (Ortschaft, Landstraße oder Autobahn) vorgeschriebenen Geschwindigkeit ertönt.
Die Zentrale enthält als charakteristische Elemente:
a)-einen programmierbaren Mikroprozessor (C18) in einem Datenverarbeitungsmodul (MT),
- welches -erstens- unter Einbeziehung der Geschwindigkeits (V) - und Abstandsmessungen D, eines Impedanzangleichungsmoduls (MAI) die Verwaltung der Gesamtheit des Daten-Outputs und -Inputs und der Software-Funktionen ermöglicht;
- das -zweitens- gewährleistet, daß die Zentrale durch einfache Eingriffe in die Software an alle einschlägigen Parameter und Koeffizienten angepaßt werden kann, die geliefert werden von: einem Empfindlichkeitsregler (MAS), einem Selektionsmodul für die intemen Parameter (MP), und einem Formatierungsmodul für die externen Parameter (MIF).
- das -drittens- mittels einer digitalen Eingabevorrichtung (EN), die Umschaltung auf rückwärtsgerichteten Betrieb und im Falle einer Änderung der einschlägigen Bestimmungen der Straßenverkehrsordnung (Mindestsicherheitsabstände und Geschwindigkeitsbegrenzungen) eine unkomplizierte Anpassung der Zentrale
vorsieht;
b) - ein Multiplexleuchtmodul in Digitalformat (MA), welches den jeweiligen Zusatzsicherheitsabstand inkremental wiedergibt und bei positivem Kollisionsrisiko blinkt, bei negativem Kollisionsrisiko (Risikofreiheit) dagegen konstant leuchtet. Das Anwachsen des Kollisionsrisikos wird dabei gemäß einem Blinkparameter und einem Modulationsparameter für das Alarmsignal dem Fahrzeuglenker wahmehmbar gemacht, dergestalt daß die Frequenzen entsprechend der Zunahme des Absolutbetrags der Negativausschläge des Zusatzsicherheitsabstands variieren.
- D bezeichnet die Distanz zu dem vorausfahrenden bzw. zum nachfolgenden Fahrzeug, welche durch eine eigens zu diesem Zwecke am Fahrzeug angebrachte Vorrichtung gemessen wird.
- Dr bezeichnet den Mindestsicherheitsabstand gemäß den verbindlichen oder empfohlenen Normen, der von der Zentrale in Abhängigkeit von der jeweiligen Geschwindigkeit (V) und der jeweiligen Fahrsituation moduliert wird. Die Fahrsituation wiederum wird durch folgende - automatisch übemommene - Parameter objektiviert: die eingestellte Scheibenwischergeschwindigkeit, das Schaltverhalten des Schnee/Glatteis-Detektors, die Schaltereinstellung des Nebelrücklichts, die Einstellung eines Empfindlichkeitsreglers, ein von einem evtl. vorhandenen Wartungs-und-Fahrzeugzustands-Kontrollmodul an die digitale Dateneingabe übermitteltes Steuersignal,
- D-Dr bezeichnet den Zusatzsicherheitsabstand in Meter. Er ist gleich der positiven oder negativen Differenz, die sich durch Subtraktion des Mindestsicherheitsabstandes Dr von dem tatsächlichen Abstand D errechnet.
c) - das Klangmodul (MS), das zwei akustische Wamzeichen erzeugt:
*- einen Alarmton, der mit dem Modulationsparameter entsprechend dem Absolutbetrag der Negativausschläge des Zusatzsicherheitsabstandes D-Dr moduliert wird und bei Kollisionsgefahr einsetzt;
*- einen Einfach-, Zweifach- oder Dreifach-Bip-Klangimpuls, der die Überschreitung der jeweiligen nach Fahrzeugart Personenkraftwagen (VL), Lastkraftwagen (PL), Kraftfahrzeuge für Kollektivtransport (TC) und Verkehrsart Ortschaft, Landstraße, Autobahn gesondert festgelegten Normgeschwindigkeit anzeigt;
d) - eine aktive Ausgangsbuchse (AL) zur Übertragung - im Gefahrenfall - von Steuerungsimpulsen auf periphere Geräte wie Wamleuchten, Summer, Sprechsignale oder externe Signalanlagen und - im Falle des rückwärtsgerichteten Betriebs der Zentrale - ein von einem oder mehreren der üblichen vorschriftsmäßigen Außenfahrtanzeigegeräte ausgesandtes links/rechts-alternierendes Blinksignal mit entsprechender paralleler Wamanzeige am Armaturenbrett;
e) - ein in Assembler-Sprache arbeitendes EDV-Programm, welches die Reaktionszeit und den Betrieb des Gerätes optimiert, die zentrale auf die jeweils geltenden ebenso wie auf künftige Bestimmungen und Normen der Straßenverkehrsordnung - ohne Eingriff in die Hardwarestruktur - durch Abänderung der entsprechenden in einer ROM-Festdatentabelle gespeicherten Werte, Parameter und Koeffizienten, einstellen bzw. umstellen kann.

2. Mikroprogrammierbare elektronische Antikollisionsalarmzentrale wie unter Patentanspruch 1 mit dem Charakteristikum, daß sie mittels des Impedanzangleichungsmoduls (MAI) einen Adapter als Schnittstelle -Interface- zwischen den Eingängen für Geschwindigkeit (V) bzw. Abstand D und einer im Mikroprozessor vorhandenen Einrichtung für Analogdateneinlesung (C18) zur Verfügung stellt.

3. Mikroprogrammierbare elektronische Antikollisionsalarmzentrale wie unter Patentanspruch 1 mit dem Charakteristikum, daß einerseits die den jeweils geltenden in der Straßenverkehrsordnung vorgeschriebenen Geschwindigkeiten entsprechenden Normgeschwindigkeitsschwellenwerte sowie die eventuellen für Regenwetter vorgeschriebenen Geschwindigkeitsherabsetzungen, andererseits die Fahrzeugart PKW (VL), LKW (PL), Kfz. für Kollektivtransport (TC) und die Ausstattung mit einem Antiblockierbremssystem (ABR) mittels des Parametereinstellmoduls (MP) automatisch erfaßt und berücksichtigt werden. Dabei wird eine angemessene Korrektur durch Anwendung entsprechender Koeffizienten zur Neuberechnung des Mindestsicherheitsabstands Dr vorgenommen.

4. Mikroprogrammierbare elektronische Antikollisionsalarmzentrale wie unter Patentanspruch 1 mit dem Charakteristikum, daß das Formatierungsmodul (MIF) automatisch die externen Parameter Regen (P), Schnee/Glatteis (G) und Nebel (B) erfaßt und berücksichtigt, indem es: entsprechende Koeffizienten zur Neuerrechnung des Mindestsicherheitsabstandes Dr einsetzt - respektive das Ein-/Ausschalten, der Scheibenwischer, des Schnee/Glatteis-Detektors, des Nebelrücklichts berücksichtigt und automatisch eine Schwellengeschwindigkeit (VS) eingestellt, unterhalb derer das Antikollisionsalarmsignal und die Digitalanzeige (MA) abgeschaltet sind.

5. Mikroprogrammierbare elektronische Antikollisionsalarmzentrale wie unter Patentansprüchen 1 und 4 mit dem Charakteristikum, daß der Geschwindigkeitsschwellenwert (VS) außer Wirkung gesetzt wird, sobald einer der beiden externen Parameter - Schnee/Glatteis (G) oder Nebel (B) - aktiv wird, und die Anzeige des Zusatzsicherheitsabstands D-Dr sowie das Ertönen des Alarmsignals schon bei Geschwindigkeiten unterhalb des Schwellenwertes (VS) veranlaßt wird, und zwar auf Grund der Schaltereinstellung - sei es des Schnee/Glatteis-Detektors, sei es des Nebelrücklichts -, welche die Hinzuziehung der entsprechenden Koeffizienten veranlaßt.

6. Mikroprogrammierbare elektronische Antikollisionsalarmzentrale wie unter Patentanspruch 1 mit dem Charakteristikum, daß sie mittels des Empfindlichkeitsreglers (MAS) die Erhöhung des Mindestsicherheitsabstands Dr zuläßt, sobald nämlich der Fahrzeuglenker in der Absicht, seinen vorderen Zusatzsicherheitsabstand D-Dr innerhalb der durch den entsprechenden Koeffizienten gezogenen Grenzen zu vergrößem, einen neuen Empfindlichkeitsparameter (S) durch Betätigung des Empfindlichkeitsreglers am Armaturenbrett einstellt.

7. Mikroprogrammierbare elektronische Antikollisionsalarmzentrale wie unter Patentanspruch 1 mit dem Charakteristikum, daß der Digitaleingang (EN) - auf der Grundlage eines Dialogs mit dem Wartungs-und-Fahrzeugzustands-Kontrollmodul des Wagens sowie mit jeder anderen numerische Werte emittierenden Fixeinrichtung des Wagens - den Wartungsstand und den allgemeinen Fahrzeugszustand berücksichtigt, indem eine automatische angemessene Korrektur des Mindestsicherheitsabstands Dr unter Anwendung eines entsprechenden Koeffizienten vorgenommen wird.

## Claims

1. Microprogrammable electronic anticollision alarm control and aid for driving road motor vehicles, enabling the driver when in traffic, to dispose of two forms of information in real time,
on the one hand:
*- a visual numerical information on a digital readout (MA), expressing in meters a positive or negative safety margin D-Dr existing between his vehicle and the one infront in relation to a safety limit Dr, combined with a simultaneous audible waming in the likelihood of a collision,
on the other hand,
*- a information in the form of an audible warning "beep" given by a sound chip (MS), when transgressing in ascending order the speed limits corresponding to the standard speed limits authorized and generally applied in built-up areas, open roads and motorways according to the type of vehicle.
It comprises the following characteristics
a)- a programmable microcontrol (C18) data processing unit (MT) enabling on the one hand, the management of the full range of inputs/outputs and software functions in combination with speed (V) and distance D values from the impedance adapting unit (MAI), and on the other hand enabling, by the simple modification of the software, the adaptability of the control device to all the parameters and corresponding coefficients taken into account by a data logger of sensibility (MAS), a unit for selecting intemal parameters (MP), a unit for putting into form the external parameters (MIF) and by a numerical input (EN), it is reversible for using in a backward position and it can be adjusted to comply with the actual and future regulations and standards for safety limits Dr to be respected between vehicles travelling in lanes and the standard speeds,
b)- a multiplex digital readout (MA) enabling an incremented digital visualisation of the safety margin D-Dr, continuous if positive and blinking when it becomes negative, and materialising the increased risk of collision according to a blinking parameter and a modulated alarm parameter whose frequences vary according to the increase of the absolute value of the underflow of the safety margin D-Dr.
- D represents the distance between the vehicle in front or behind in a backward position, as mesured by an additional device on the vehicle.
- Dr represents the safety limit established in accordance with the regulations and standards or recommendations according to speed (V) and modified according to circumstances by automatically taking into account parameters corresponding to the use of windscreen-wipers during rainfall, the switching on of a snow/ice detector, the connection to rear fog lights, the adjusting of a potentiometer of sensibility and the enabling signal to the numerical data input of a servicing and maintenance computer.
- D-Dr represents the safety margin expressed in meters resulting from the positive or negative difference between these two distances D and Dr.
c)- the sound chip (MS) emitting two different audible alarms
comprising of:
*- a modulated audible alarm varying according to the increase of the absolute value of the underflow of the safety margin D-Dr in the likelihood of a collision.
*- an audible single, double or triple waming "beep" the moment the vehicle passes when transgressing in ascending order any of the three authorized standard speed limits in force in built-up areas, on open roads and motorways for the three types of road vehicles, cars (VL), transport vehicles for goods (PL) and public passengers vehicles (TC),
d)- an active output (AL) enabling in case of alarm, the control of other devices apart from the alarm control unit such as waming lights, buzzers, vocal messages and/or externally visible signals. And when the control unit is used in backward position, an alternativ left/right blinking of one or other of the conventional rear lights and simultaneous by a secondary visual waming reminder on the instrument panel,
e)- software for managing the alarm control unit in an "Assembler" language program optimising the response time and managing the device, and without modifying the hardware, but by simple modification of parameter and coefficients values in a fixed data table in ROM memory, rendering the data processing unit compatible with the actual or future regulations and standards in force.

2. Microprogrammable electronic anticollision alarm control as described in claim 1 wherein it enables, by means of the impedance adapting unit (MAI), it provides for an interface between speed (V) and distance D inputs and an analogic data logger in the alarm control unit (CI8).

3. Microprogrammable electronic anticollision alarm control as described in claim 1 wherein the unit selecting the condition of intemal parameters (MP) automatically establishes the levels of standard speed limits corresponding to the actual speed limits in force and also their eventual reduction during rainfall on the one hand and on the other hand takes into account the three types of road vehicles - cars (VL), and transport vehicles for goods (PL) and public passengers vehicles (TC) as well as their eventual use of anti-blocking-wheel (ABR) carrying out the appropriate correction and applying corresponding coefficients to the safety limit Dr.

4. Microprogrammable electronic anticollision alarm control as described in claim 1 wherein the unit for putting into form (MIF) automatically takes into account external parameters: rain (P), snow/ice (G), fog (B), carrying out the appropriate correction and applying corresponding coefficients to the safety limit Dr when the windscreen wipers, snow/ice detector and rear fog lights are respectively in use. And automatically establishes a speed threshold (VS) below which the anticollision alarm is neutralized and the digital readout (MA) is switched off.

5. Microprogrammable electronic anticollision alarm control as described in claims 1 and 4 wherein the speed threshold (VS) is neutralized as soon as one or other of the external parameters - snow/ice (G), fog (B) - is switched on displaying the safety margin readout D-Dr and setting off an anticollision alarm at speeds lower than the speed threshold (VS) applying the corresponding coefficients when the snow/ice detector and rear fog lights are respectively in use.

6. Microprogrammable electronic anticollision alarm control as described in claim 1 wherein the data logger for sensibility (MAS), increases the safety limit Dr as soon as the driver switches on the sensibility potentiometer (S) on the instrument panel, in order to increase the safety margin D-Dr in front of him within the limits fixed by the corresponding coefficient.

7. Microprogrammable electronic anticollision alarm control as described in claim 1 wherein the numerical data input (EN) by dialogue with the servicing and maintenance computer on board and with any other device on board carrying numerical data, the condition and state of wear of the vehicle are automatically taken into account and the appropriate correction and applying corresponding coefficients to the safety limit Dr.
